# EUROPEAN PATENT SPECIFICATION

(11) **EP 3 079 093 B1**
(45) Date of publication and mention of the grant of the patent: **04.03.2020**
(21) Application number: 16164533.8
(22) Date of filing: 08.04.2016
(51) Int. Cl.: G06F 21/51, G06F 21/57, G06F 21/74, H04L 9/32

(54) **METHODS AND APPARATUS TO ENABLE RUNTIME CHECKSUM VERIFICATION OF BLOCK DEVICE IMAGES**
VERFAHREN UND VORRICHTUNG ZUR ERMÖGLICHUNG DER LAUFZEITPRÜFSUMMENVERIFIZIERUNG VON BLOCKVORRICHTUNGSBILDERN
PROCÉDÉS ET APPAREIL POUR PERMETTRE UNE VÉRIFICATION DE SOMME DE CONTRÔLE D'EXÉCUTION DES IMAGES DE DISPOSITIF DE BLOC

(30) Priority: 10.04.2015 US 201514683658
(43) Date of publication of application: 12.10.2016
(73) Proprietor: Samsung Electronics Co., Ltd., Gyeonggi-do 16677 (KR)
(72) Inventor: SHAH, Jitesh, Mountain View, CA California 94040 (US); WEI, Song, Johns Creek, GA Georgia 30097 (US); AZAB, Ahmed, Palo Alto, CA California 94303 (US); CHEN, Xun, San Jose, CA California 95134 (US); NING, Peng, Saratoga, CA California 95070 (US); SHEN, Wenbo, Richardson, TX Texas 75080 (US); GRACE, Michael, Santa Clara, CA California 95054 (US)
(74) Representative: HGF Limited

(56) References cited:
- US-A1- 2004 103 299
- US-A1- 2014 325 644

## Description

### TECHNICAL FIELD

The present application relates generally to electronic devices requiring data integrity protection and, more specifically, to verifying the data integrity of block devices of mobile devices requiring run-time file-based update.

### BACKGROUND

Most electronic devices utilize a physical data storage hardware, such as a hard drive (also commonly known as "hard disk") and/or a Multi-media card (MMC), and a multilayered software architecture to manage how data is stored and retrieved. In this multilayered software architecture, In many cases, data stored in an electronic device is of high importance, and needs protection against malicious or unverifiable modifications, which is known as data integrity protection. For example, telecommunication handsets have embedded MMCs housing operating system related data that is the frequent target of malicious alternations aiming to hijack the control of a device or to steal sensitive information. On the other hand, a valid update or change to the data stored on a device is often needed. For example, the manufacturer frequently releases Over-The-Air (OTA) software updates to the telecommunications handsets to fix bugs or upgrade software system features. Therefore, data integrity protection is also required to accommodate the run-time update to the data on devices.

One common approach of data integrity protection is to verify the data on the layer of block device. Block device, an abstract layer in the above-mentioned multilayered software architecture, manipulates data in fixed-size blocks, and controls the data transfer between the layer of file system and the layer of actual physical hardware. Data stored on a block device can be verified by applying a cryptographic hash function to the current contents of the block device as a whole to obtain a hash checksum and comparing this hash checksum against a precomputed known good checksum value. The known good checksum value is the result of applying the same hash function to the known good contents of a block device. Some methods of calculating the checksum utilize calculation of a cryptographic hash tree. The root of the hash tree, also called "root hash", is the calculated checksum used to check against the known good checksum value. When the calculated checksum matches the known good checksum, the block device contents are considered verified, i.e., the contents are known good. When an authenticated change is applied to a verified block device, new known good checksum has to be provided, and thereafter, the device can be verified by comparing the calculated hash checksum to the new known good hash checksum. It should be pointed out that the hash checksum calculation is sensitive to not only the contents stored in each data block but also the distribution order of data blocks on a block device such that even if a block device includes the same set of data blocks as a the verified or known good block device. Consequently, to maintain the feasibility of utilizing the pre-computed known-good hash checksum for data integrity verification after update, the update to the block devices to be applied in a deterministic block-by-block manner, i.e., the change to each data block and the distribution of data blocks after update are pre-determined, from which a new known good hash checksum is pre-computed. Such an update method is known as block-based update. However, many manufacturers use the file-based update method in which the update is applied by removing, adding, and/or overwriting files in the layer of file system, and the actual changes to the underlying block device layer are non-deterministic, i.e., the change to each data block and the distribution of data blocks after update are unknown now. That is, the pre-computed known good checksum value can no longer be used to verify the data on device after a file-based update is applied. As a result, the above-described methodology cannot be used to verify the data integrity of devices with run-time file-based update. Accordingly, there is a need for methods of efficiently verifying the data integrity of block devices which can accommodate the file-based update on run time.

US-2014/325644-A1 discloses an integrity verification subsystem that can verify the integrity of software and firmware modules on a computing device at load time and/or at run time, independently of any operating systems that may be installed on the computing device. Some versions of the integrity verification subsystem can operate in physical and/or virtualized system environments, including virtualized mobile device architectures.

### SUMMARY

According to a first aspect of the present invention there is provide a method for operating an electronic device for verifying data integrity of a block device, the method comprising: providing a secure execution environment configured to monitor changes to data blocks of a block device; determining whether a secure marker is present, wherein the secure marker indicates that the block device is verified; in response to a determination that the secure marker is not present, generating a hash for changed data blocks of the block device in the secure execution environment; verifying a cryptographic signature regarding the hash for the changed data blocks in the secure execution environment.

According to a second aspect of the present invention there is provide a n electronic device operating in a secure execution environment for monitoring changes to data blocks of a block device of the electronic device, comprising: a hash generator configured to operate in the secure execution environment and to determine whether a secure marker is present, wherein the secure marker indicates that the block device is verified, and, in response to a determination that the secure marker is not present, generate a hash associated with a changed data block of the block device; a cryptographic signature verifier configured to operate in the secure execution environment and to verify a cryptographic signature regarding the hash for the changed data block of the block device.

According to a third aspect of the present invention there is provide a method for an electronic device for verifying data integrity of a block device of the electronic device, the method comprising: receiving a file-based update package; applying the file-based update package to a block device of the secure partition; determining whether a secure marker is present, wherein the secure marker indicates that the block device is verified; in response to a determination that the secure marker is not present, generating a root hash associated with at least one updated data block of the block device; and verifying a signature regarding the root hash associated with the at least one updated data block.

Other technical features may be readily apparent to one skilled in the art from the following figures, descriptions, and claims.

Before undertaking the DETAILED DESCRIPTION below, it may be advantageous to set forth definitions of certain words and phrases used throughout this patent document. The term "couple" and its derivatives refer to any direct or indirect communication between two or more elements, whether or not those elements are in physical contact with one another. The terms "transmit," "receive," and "communicate," as well as derivatives thereof, encompass both direct and indirect communication. The terms "include" and "comprise," as well as derivatives thereof, mean inclusion without limitation. The term "or" is inclusive, meaning and/or. The phrase "associated with," as well as derivatives thereof, means to include, be included within, interconnect with, contain, be contained within, connect to or with, couple to or with, be communicable with, cooperate with, interleave, juxtapose, be proximate to, be bound to or with, have, have a property of, have a relationship to or with, or the like. The term "controller" means any device, system or part thereof that controls at least one operation. Such a controller can be implemented in hardware or a combination of hardware and software and/or firmware. The functionality associated with any particular controller can be centralized or distributed, whether locally or remotely. The phrase "at least one of," when used with a list of items, means that different combinations of one or more of the listed items can be used, and only one item in the list may be needed. For example, "at least one of: A, B, and C" includes any of the following combinations: A, B, C, A and B, A and C, B and C, and A and B and C.

Definitions for other certain words and phrases are provided throughout this patent document. Those of ordinary skill in the art should understand that in many if not most instances, such definitions apply to prior as well as future uses of such defined words and phrases.

### BRIEF DESCRIPTION OF THE DRAWINGS

For a more complete understanding of this disclosure and its advantages, reference is now made to the following description, taken in conjunction with the accompanying drawings, in which:
FIGURE 1 illustrates an example wireless network according to this disclosure;
FIGURES 2A and 2B illustrate example wireless transmit and receive paths according to this disclosure;
FIGURE 3 illustrates an example user equipment according to this disclosure;
FIGURE 4 illustrates an example verification system according to this disclosure;
FIGURE 5 is a flowchart of an example verification method according to this disclosure;
FIGURE 6 is a flowchart of another example verification method according to this disclosure;
FIGURE 7 is a flowchart of still another example verification method according to this disclosure; and
FIGURE 8 is a flowchart of yet another example verification method according to this disclosure.

### DETAILED DESCRIPTION

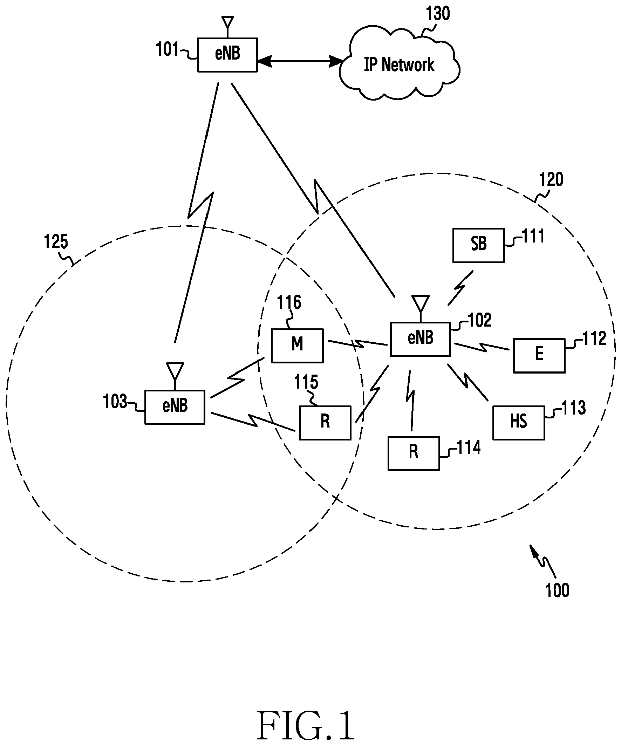

FIGURES 1 through 8, discussed below, and the various embodiments used to describe the principles of the present invention in this patent document are by way of illustration only and should not be construed in any way to limit the scope of the disclosure. Those skilled in the art will understand that the principles of this disclosure can be implemented in any suitably arranged device or system.

FIGURE 1 illustrates an example wireless network 100 according to this disclosure. The embodiment of the wireless network 100 shown in FIGURE 1 is for illustration only. Other embodiments of the wireless network 100 could be used without departing from the scope of this disclosure.

As shown in FIGURE 1, the wireless network 100 includes an eNodeB (eNB) 101, an eNB 102, and an eNB 103. The eNB 101 communicates with the eNB 102 and the eNB 103. The eNB 101 also communicates with at least one Internet Protocol (IP) network 130, such as the Internet, a proprietary IP network, or other data network.

Depending on the network type, other well-known terms may be used instead of "eNodeB" or "eNB," such as "base station" or "access point." For the sake of convenience, the terms "eNodeB" and "eNB" are used in this patent document to refer to network infrastructure components that provide wireless access to remote terminals. Also, depending on the network type, other well-known terms may be used instead of "user equipment" or "UE," such as "mobile station," "subscriber station," "remote terminal," "wireless terminal," or "user device." For the sake of convenience, the terms "user equipment" and "UE" are used in this patent document to refer to remote wireless equipment that wirelessly accesses an eNB, whether the UE is a mobile device (such as a mobile telephone or smartphone) or is normally considered a stationary device (such as a desktop computer or vending machine).

The eNB 102 provides wireless broadband access to the network 130 for a first plurality of user equipments (UEs) within a coverage area 120 of the eNB 102. The first plurality of UEs includes a UE 111, which can be located in a small business (SB); a UE 112, which can be located in an enterprise (E); a UE 113, which can be located in a WiFi hotspot (HS); a UE 114, which can be located in a first residence (R); a UE 115, which can be located in a second residence (R); and a UE 116, which can be a mobile device (M) like a cell phone, a wireless laptop, a wireless PDA, or the like. The eNB 103 provides wireless broadband access to the network 130 for a second plurality of UEs within a coverage area 125 of the eNB 103. The second plurality of UEs includes the UE 115 and the UE 116. In some embodiments, one or more of the eNBs 101-103 can communicate with each other and with the UEs 111-116 using 5G, LTE, LTE-A, WiMAX, or other advanced wireless communication techniques.

Dotted lines show the approximate extents of the coverage areas 120 and 125, which are shown as approximately circular for the purposes of illustration and explanation only. It should be clearly understood that the coverage areas associated with eNBs, such as the coverage areas 120 and 125, can have other shapes, including irregular shapes, depending upon the configuration of the eNBs and variations in the radio environment associated with natural and man-made obstructions.

As described in more detail below, at least one UE, such as UE 116, is configured to facilitate verification of block devices on an updated secure partition of the UE. Although FIGURE 1 illustrates one example of a wireless network 100, various changes can be made to FIGURE 1. For example, the wireless network 100 could include any number of eNBs and any number of UEs in any suitable arrangement. Also, the eNB 101 could communicate directly with any number of UEs and provide those UEs with wireless broadband access to the network 130. Similarly, each eNB 102-103 could communicate directly with the network 130 and provide UEs with direct wireless broadband access to the network 130. Further, the eNB 101, 102, and/or 103 could provide access to other or additional external networks, such as external telephone networks or other types of data networks.

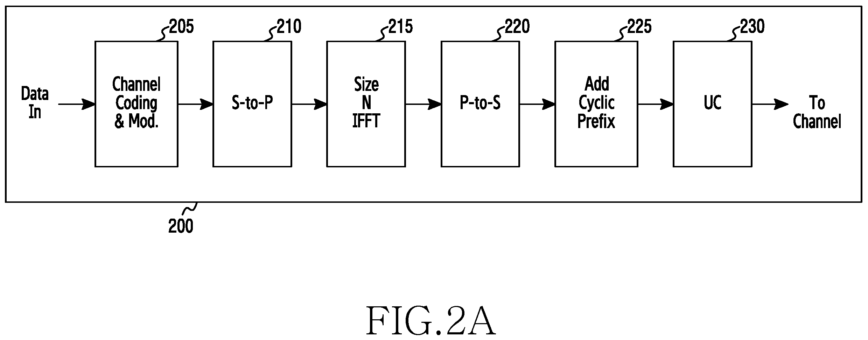

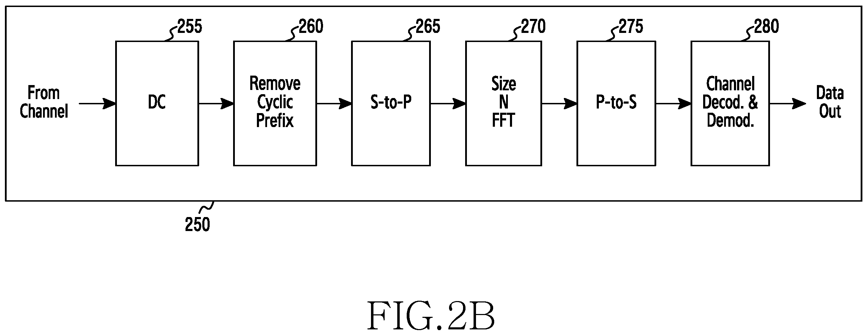

FIGURES 2A and 2B illustrate example wireless transmit and receive paths according to this disclosure. In the following description, a transmit path 200 can be described as being implemented in an eNB (such as eNB 102), while a receive path 250 can be described as being implemented in a UE (such as UE 116). However, it will be understood that the receive path 250 could be implemented in an eNB and that the transmit path 200 could be implemented in a UE. In some embodiments, processing circuitry within, or coupled to, the transmit path 200 and receive path 250 are configured to facilitate verification of block devices on an updated secure partition of a UE.

The transmit path 200 includes a channel coding and modulation block 205, a serial-to-parallel (S-to-P) block 210, a size N Inverse Fast Fourier Transform (IFFT) block 215, a parallel-to-serial (P-to-S) block 220, an add cyclic prefix block 225, and an up-converter (UC) 230. The receive path 250 includes a down-converter (DC) 255, a remove cyclic prefix block 260, a serial-to-parallel (S-to-P) block 265, a size N Fast Fourier Transform (FFT) block 270, a parallel-to-serial (P-to-S) block 275, and a channel decoding and demodulation block 280.

In the transmit path 200, the channel coding and modulation block 205 receives a set of information bits, applies coding (such as a low-density parity check (LDPC) coding), and modulates the input bits (such as with Quadrature Phase Shift Keying (QPSK) or Quadrature Amplitude Modulation (QAM)) to generate a sequence of frequency-domain modulation symbols. The serial-to-parallel block 210 converts (such as de-multiplexes) the serial modulated symbols to parallel data in order to generate N parallel symbol streams, where N is the IFFT/FFT size used in the eNB 102 and the UE 116. The size N IFFT block 215 performs an IFFT operation on the N parallel symbol streams to generate time-domain output signals. The parallel-to-serial block 220 converts (such as multiplexes) the parallel time-domain output symbols from the size N IFFT block 215 in order to generate a serial time-domain signal. The add cyclic prefix block 225 inserts a cyclic prefix to the time-domain signal. The up-converter 230 modulates (such as up-converts) the output of the add cyclic prefix block 225 to an RF frequency for transmission via a wireless channel. The signal can also be filtered at baseband before conversion to the RF frequency.

A transmitted RF signal from the eNB 102 arrives at the UE 116 after passing through the wireless channel, and reverse operations to those at the eNB 102 are performed at the UE 116. The down-converter 255 down-converts the received signal to a baseband frequency, and the remove cyclic prefix block 260 removes the cyclic prefix to generate a serial time-domain baseband signal. The serial-to-parallel block 265 converts the time-domain baseband signal to parallel time domain signals. The size N FFT block 270 performs an FFT algorithm to generate N parallel frequency-domain signals. The parallel-to-serial block 275 converts the parallel frequency-domain signals to a sequence of modulated data symbols. The channel decoding and demodulation block 280 demodulates and decodes the modulated symbols to recover the original input data stream.

Each of the eNBs 101-103 can implement a transmit path 200 that is analogous to transmitting in the downlink to UEs 111-116 and can implement a receive path 250 that is analogous to receiving in the uplink from UEs 111-116. Similarly, each of UEs 111-116 can implement a transmit path 200 for transmitting in the uplink to eNBs 101-103 and can implement a receive path 250 for receiving in the downlink from eNBs 101-103.

Each of the components in FIGURES 2A and 2B can be implemented using only hardware or using a combination of hardware and software/firmware. As a particular example, at least some of the components in FIGURES 2A and 2B can be implemented in software, while other components can be implemented by configurable hardware or a mixture of software and configurable hardware. For instance, the FFT block 270 and the IFFT block 215 can be implemented as configurable software algorithms, where the value of size N can be modified according to the implementation.

Furthermore, although described as using FFT and IFFT, this is by way of illustration only and should not be construed to limit the scope of this disclosure. Other types of transforms, such as Discrete Fourier Transform (DFT) and Inverse Discrete Fourier Transform (IDFT) functions, could be used. It will be appreciated that the value of the variable N can be any integer number (such as 1, 2, 3, 4, or the like) for DFT and IDFT functions, while the value of the variable N can be any integer number that is a power of two (such as 1, 2, 4, 8, 16, or the like) for FFT and IFFT functions.

Although FIGURES 2A and 2B illustrate examples of wireless transmit and receive paths, various changes can be made to FIGURES 2A and 2B. For example, various components in FIGURES 2A and 2B could be combined, further subdivided, or omitted and additional components could be added according to particular needs. Also, FIGURES 2A and 2B are meant to illustrate examples of the types of transmit and receive paths that could be used in a wireless network. Any other suitable architecture could be used to support wireless communications in a wireless network.

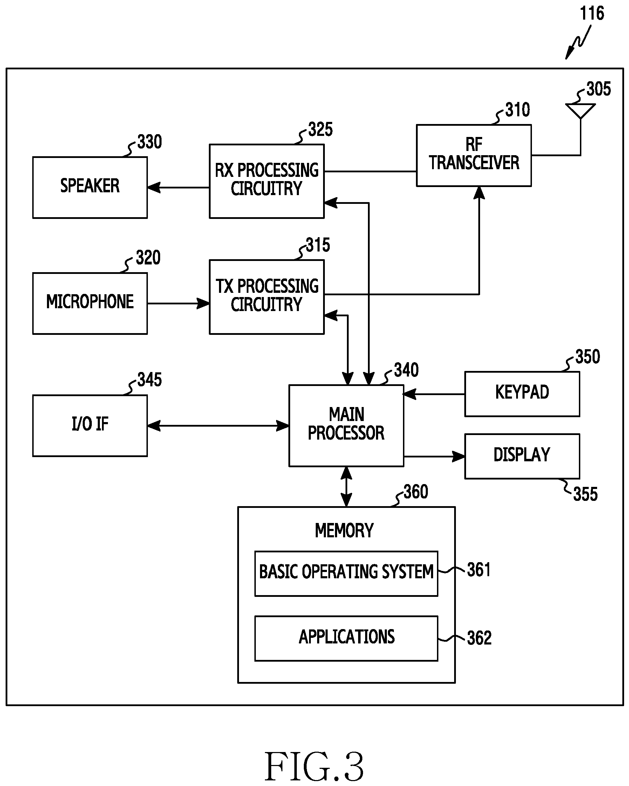

FIGURE 3 illustrates an example UE 116 according to this disclosure. The embodiment of the UE 116 illustrated in FIGURE 3 is for illustration only, and the UEs 111-115 of FIGURE 1 could have the same or similar configuration. However, UEs come in a wide variety of configurations, and FIGURE 3 does not limit the scope of this disclosure to any particular implementation of a UE.

As shown in FIGURE 3, the UE 116 includes an antenna 305, a radio frequency (RF) transceiver 310, transmit (TX) processing circuitry 315, a microphone 320, and receive (RX) processing circuitry 325. The UE 116 also includes a speaker 330, a main processor 340, an input/output (I/O) interface (IF) 345, a keypad 350, a display 355, and a memory 360. The memory 360 includes a basic operating system (OS) program 361 and one or more applications 362.

The RF transceiver 310 receives, from the antenna 305, an incoming RF signal transmitted by an eNB of the network 100. The RF transceiver 310 down-converts the incoming RF signal to generate an intermediate frequency (IF) or baseband signal. The IF or baseband signal is sent to the RX processing circuitry 325, which generates a processed baseband signal by filtering, decoding, and/or digitizing the baseband or IF signal. The RX processing circuitry 325 transmits the processed baseband signal to the speaker 330 (such as for voice data) or to the main processor 340 for further processing (such as for web browsing data).

The TX processing circuitry 315 receives analog or digital voice data from the microphone 320 or other outgoing baseband data (such as web data, e-mail, or interactive video game data) from the main processor 340. The TX processing circuitry 315 encodes, multiplexes, and/or digitizes the outgoing baseband data to generate a processed baseband or IF signal. The RF transceiver 310 receives the outgoing processed baseband or IF signal from the TX processing circuitry 315 and up-converts the baseband or IF signal to an RF signal that is transmitted via the antenna 305.

The main processor 340 can include one or more processors or other processing devices and execute the basic OS program 361 stored in the memory 360 in order to control the overall operation of the UE 116. For example, the main processor 340 could control the reception of forward channel signals and the transmission of reverse channel signals by the RF transceiver 310, the RX processing circuitry 325, and the TX processing circuitry 315 in accordance with well-known principles. In some embodiments, the main processor 340 includes at least one microprocessor or microcontroller.

The main processor 340 is also capable of executing other processes and programs resident in the memory 360, such as operations for facilitating verification of block devices on an updated secure partition of a UE. The main processor 340 can move data into or out of the memory 360 as required by an executing process. In some embodiments, the main processor 340 is configured to execute the applications 362 based on the OS program 361 or in response to signals received from eNBs or an operator. The main processor 340 is also coupled to the I/O interface 345, which provides the UE 116 with the ability to connect to other devices such as laptop computers and handheld computers. The I/O interface 345 is the communication path between these accessories and the main controller 340.

The main processor 340 is also coupled to the keypad 350 and the display unit 355. The operator of the UE 116 can use the keypad 350 to enter data into the UE 116. The display 355 can be a liquid crystal display or other display capable of rendering text and/or at least limited graphics, such as from web sites.

The memory 360 is coupled to the main processor 340. Part of the memory 360 could include a random access memory (RAM), and another part of the memory 360 could include a Flash memory or other read-only memory (ROM).

Although FIGURE 3 illustrates one example of UE 116, various changes can be made to FIGURE 3. For example, various components in FIGURE 3 could be combined, further subdivided, or omitted and additional components could be added according to particular needs. As a particular example, the main processor 340 could be divided into multiple processors, such as one or more central processing units (CPUs) and one or more graphics processing units (GPUs). Also, while FIGURE 3 illustrates the UE 116 configured as a mobile telephone or smartphone, UEs could be configured to operate as other types of mobile or stationary devices.

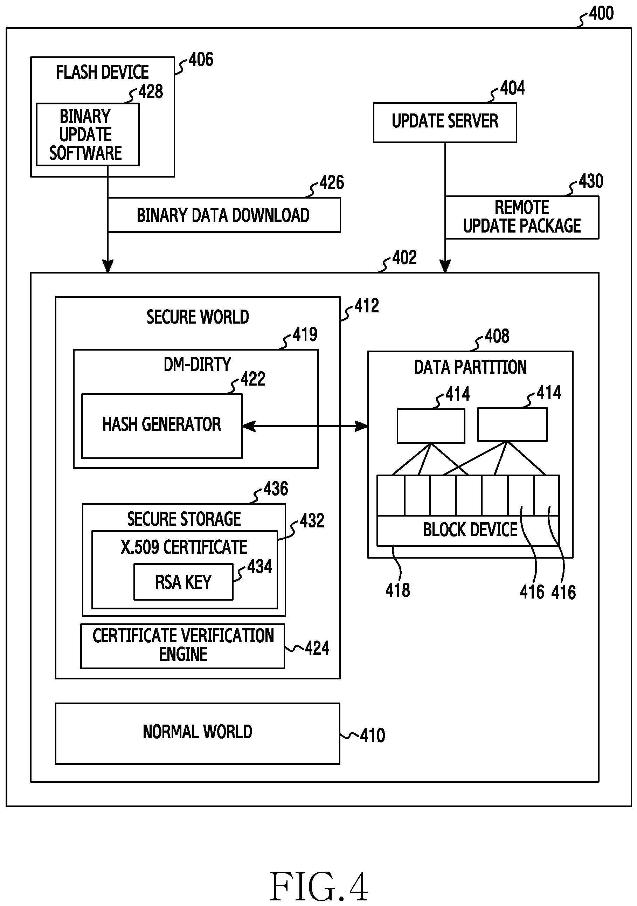

FIGURE 4 illustrates an example verification system 400 for file-based update according to this disclosure. The embodiment of the verification system 400 illustrated in FIGURE 4 is for illustration only. Other embodiments could be used without departing from the scope of the present disclosure.

The verification system 400 includes verification processing circuitry (VPC) 402, a flash device 406, and an update server 404. The VPC 402 includes a secure or data partition 408 to be protected, a normal execution environment called a normal world 410, and an isolated execution environment called a secure world 412. The data partition 408 includes system files 414 mapped by a file system to data blocks 416 of a block device 418. The system files 414 are of the type normally desired to be protected from unauthorized updating and/or alteration. For example, in cases where the verification system 400 is integrated with or is a component of an ANDROID operating system based device, such as a mobile operating system (OS) based on the LINUX kernel or similar operating system for a mobile touchscreen device, the system files 414 can be located in the /system partition of the device. The secure world 412 includes a device mapper 419, in this embodiment a device mapper called DM-DIRTY. DM-DIRTY is configured to selectively serve as a layer between a file system and block device 418 of the data partition 408. DM-DIRTY is configured to capture any changes to the block device 418 resulting from a change to files of the data partition, such as files changed due to application of a file-based update. DM-DIRTY interprets any changes in the file system and utilizes information regarding exactly which data blocks 416 are changed on runtime. For each data block 416 being changed, DM-DIRTY is configured to calculate a hash based on the contents of the changed data block and update corresponding leaves of a hash tree of the block device 418. DM-DIRTY is further configured to calculate a hash tree and a root hash of the block device 418. The device mapper 419, DM-DIRTY, includes a hash generator 422. The secure world 412 further includes a certificate verification engine 424. In cases where the verification system 400 is integrated with or is a component of an ANDROID operating system based device, the secure world 412 can be configured to execute the recovery boot mode of the device. In some embodiments, the secure world 412 can be associated with a reduced instruction set computer based device (such as a device implementing ARM TrustZone architecture), can be a Hypervisor, or any other trusted execution environment. The device mapper DM-DIRTY is configured to read the system files 414 of the data partition 408 and is configured to communicate information about the data partition 408 to the hash generator 422. The information about the data partition 408 can include system file 414 information (such as information related to the mapping between system files 414 and data blocks 416), the contents of the data blocks 416, and any other information regarding or carried by the data partition 408. The hash generator 422 is further configured to selectively generate one or more hashes based on the contents of the data partition 408.

In certain embodiments, the system files 414 and their related data blocks 416 are altered in response to a flash update package 426 being applied to the data partition 408. The flash update package 426 can be supplied to the VPC 402 by the flash device 406 running memory flash software such as a binary download software 428. In certain embodiments, the system files 414 and their related data blocks 416 are altered in response to a remote update package 430 that is applied to the data partition 408. The remote update package 430 can be supplied wirelessly to the VPC 402 by the update server 404. The update server 404 can be a device operating in the IP Network 130. In alternative embodiments, an update package may be pushed to the VPC 402 or otherwise delivered to the VPC 402 via any other type of network update delivery device and via any other type of network connection, such as through a personal computer connected to an internet service provider.

A cryptographic security certificate, such as an X.509 certificate 432 that has a cryptographic key, such as an RSA key 434, is stored in a secure storage 436. In certain embodiments, the RSA key 434 is rooted at a known or trusted public certificate, or both, of the issuer of the RSA key 434. The secure storage 436 is configured to only share the contents of the X.509 certificate 432 with the certificate verification engine 424 of the secure world 412. The certificate verification engine 424 is further configured to selectively cryptographically sign a hash generated by the hash generator 422 using the RSA key 434. The VPC 402 can be integrated with, or can be a component of, the memory 360 or one or more other components of the UE 116.

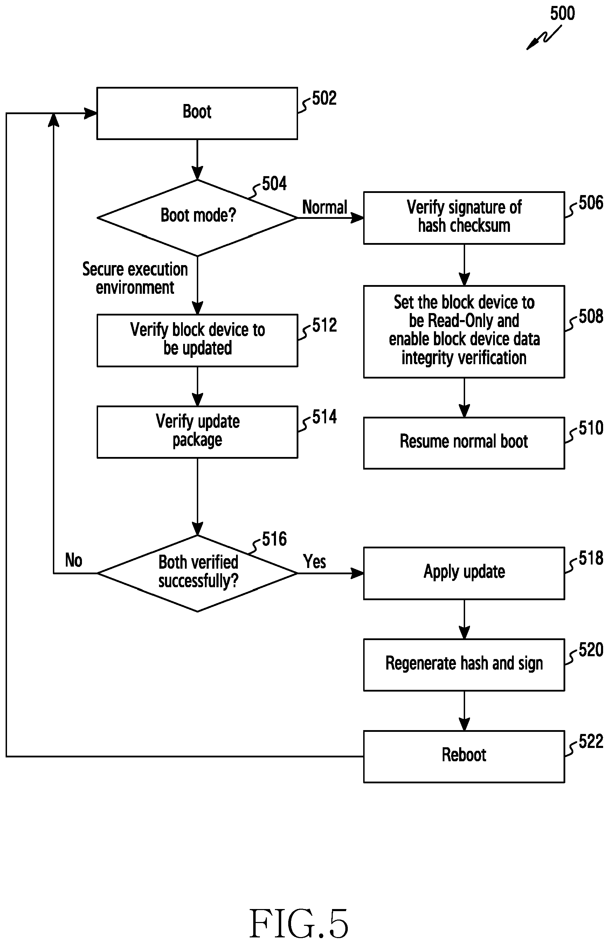

FIGURE 5 illustrates an example verification method 500 according to this disclosure. The embodiment of the verification method 500 illustrated in FIGURE 5 is for illustration only. While the flow chart depicts a series of sequential steps, unless explicitly stated, no inference should be drawn from that sequence regarding specific order of performance, performance of steps or portions thereof serially rather than concurrently or in an overlapping manner, or performance of the steps depicted exclusively without the occurrence of intervening or intermediate steps. The process depicted in the example depicted is implemented by a processing circuitry, such as a processor or processor array, in, for example, a mobile station.

At step 502, the verification method 500 begins by initiating a boot procedure of a verification device or verification circuitry such as the VPC 402. At step 504 the verification method 500 determines which of a normal boot mode and a secure boot mode has been initiated. When the normal boot mode has been initiated, the verification method 500 progresses to step 506 and verifies the cryptographic signature of the hash checksum of a data partition such as data partition 408. At step 508, the block device to which the data partition 408 is mapped is set to be read-only with data integrity verification functionality turned on. At step 510, the verification method 500 resumes normal boot operation. However, when at step 504 the verification method 500 determines that a secure mode has been initiated, the verification method 500 progresses from step 504 to step 512. At step 512 the data partition is verified. Next, at step 514, an update package such as flash update package 426 or remote update package 430 is verified. At step 516, if one of the partition and the update package are not verified successfully, the verification returns to step 502. At step 516, if both the data partition and the update package are verified successfully, the verification method 500 progresses to step 518. At step 518, the update package is applied to the data partition. At step 520, a hash is generated based on the new data partition content and thereafter signed using a securely provided cryptographic key. After cryptographically signing the hash using the cryptographic key, the verification method initiates a reboot procedure at 522 which returns the verification method 500 to step 502.

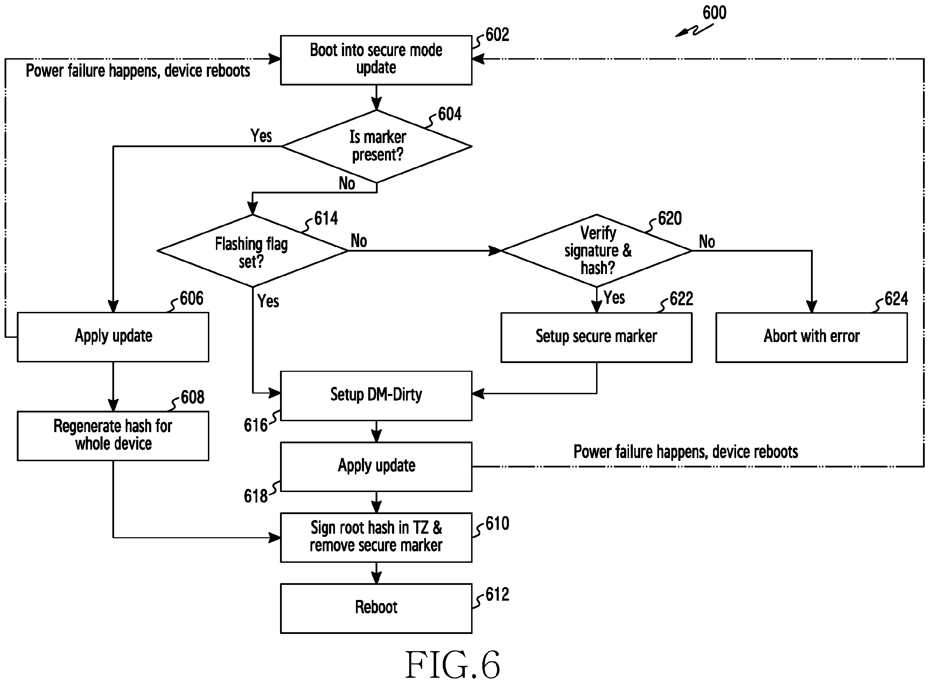

FIGURE 6 illustrates an example verification method 600 according to this disclosure. The embodiment of the verification method 600 illustrated in FIGURE 6 is for illustration only. While the flow chart depicts a series of sequential steps, unless explicitly stated, no inference should be drawn from that sequence regarding specific order of performance, performance of steps or portions thereof serially rather than concurrently or in an overlapping manner, or performance of the steps depicted exclusively without the occurrence of intervening or intermediate steps. The process depicted in the example depicted is implemented by a processing circuitry, such as a processor or processor array, in, for example, a mobile station.

At step 602, the verification method 600 begins by booting into a secure mode configured to apply an update package. At step 604, the verification method determines whether a secure marker is set or present. Presence of the secure marker indicates that a block device is verified and further provides power failure support for update process. Generation of the secure marker is discussed later with reference with step 622. If the secure marker is set, the verification method progresses to step 606 where the update is applied to a secure or data partition. If a power failure occurs during the file-based update process, the method reboots into the secure mode at step 602. At step 608, the verification method 600 regenerates a hash based on the entire contents of the block device of the data partition. Next, at step 610, the verification method 600 cryptographically signs the generated root hash using a securely stored cryptographic key and removes the secure marker. Next, the verification method 600 progresses to step 612 and initiates a reboot. However, if at step 604 the verification method 600 determines that the secure marker is not set, the verification method 600 proceeds to step 614 and determines whether a special flashing flag has been set. Having a special flashing flag set indicates a block device has previously been verified as being valid and/or secure. If the flashing flag has been set, the verification method 600 proceeds to step 616 and sets up a device mapper, in this case, the above-described device mapper called DM-DIRTY 419. With DM-DIRTY 419 set up, changes to files of a data partition and data blocks of a block device of the data partition will be monitored and utilized by DM-DIRTY to generate hashes of only the updated data blocks (as opposed to the all data blocks), update the leaves of a hash tree of the updated block device, and generate a root hash of the hash tree of the updated block device once the block device has been updated. In some cases, the updated block device may be located on a system partition ("/system") of an ANDROID operating system based device. At step 618, the file-based update is applied to a block device of a secure or data partition. When the application of the update has completed, DM-DIRTY proceeds to generate the root hash of the updated block device as described above. The verification method 600 then proceeds to step 610. However, if at step 614 the verification method 600 determines that the flash related flag has not been set, the verification method 600 proceeds to step 620 and attempts to verify an existing cryptographically signed hash of the contents of a block device that is to be updated. If the verification method 600 verifies the signature and the hash, the verification method 600 proceeds to step 622 and sets up a secure marker, to indicate that the block device is valid and/or verified. In some cases, a secure marker is a securely stored and encrypted file within a security architecture (such as ARM Trustzone). After setting up the secure marker, the verification method 600 proceeds to step 616. However, if at step 620 the verification method 600 fails to verify the signature and the hash, the verification method 600 proceeds to step 624 and aborts the process and indicates an error.

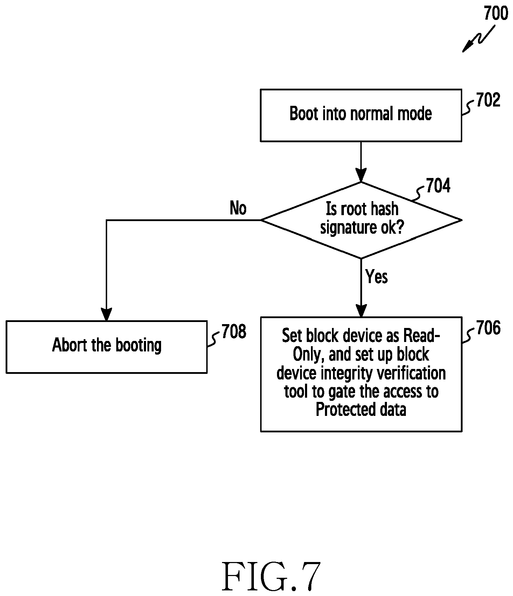

FIGURE 7 illustrates an example verification method 700 according to this disclosure. The embodiment of the verification method 700 illustrated in FIGURE 7 is for illustration only. While the flow chart depicts a series of sequential steps, unless explicitly stated, no inference should be drawn from that sequence regarding specific order of performance, performance of steps or portions thereof serially rather than concurrently or in an overlapping manner, or performance of the steps depicted exclusively without the occurrence of intervening or intermediate steps. The process depicted in the example depicted is implemented by a processing circuitry, such as a processor or processor array, in, for example, a mobile station.

At step 702, the verification method 700 begins by booting into a normal mode. In some cases, the verification method 700 can occur after the verification method 600. At step 704, the verification method 700 determines whether the cryptographic signature of the root hash is authenticated. If the signature is authenticated, the verification method 700 progresses to step 706. At step 706, the block device is set to read-only, and the verification method 700 enables a security component configured to require a hash check of the contents of the protected block device before access is granted to the protected data of the block device. In this embodiment, the security component is a block device integrity verification tool, and is configured to compare the calculated root hash against a previously generated cryptographically signed hash value. The verification method 700 at step 706 only allows access to the data of the protected block device of the data partition if the contents of the protected block device are verified by the block device integrity verification tools. If at step 704 the signature of the root hash is not verified, the verification method 700 proceeds to step 708 and aborts the process of booting into the normal mode. In cases where the verification method 700 is integrated with or is a component of an ANDROID operating system based device, the block device integrity verification tool can be configured to execute DM-VERITY designed by Google.

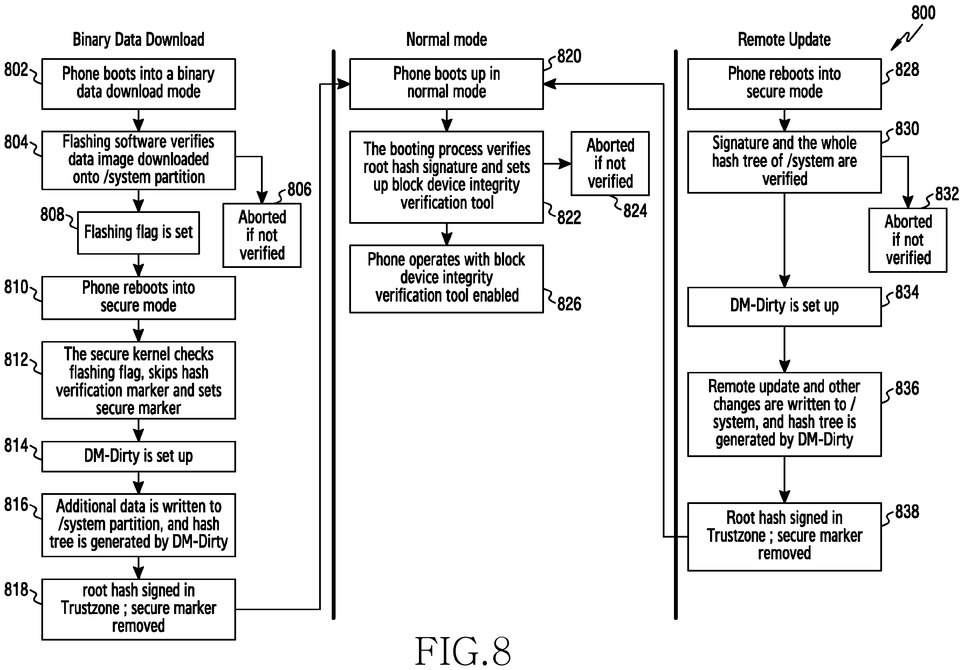

FIGURE 8 illustrates an example of applying verification method 800 according to this disclosure. The embodiment of the verification method 800 illustrated in FIGURE 8 is for illustration only. While the flow chart depicts a series of sequential steps, unless explicitly stated, no inference should be drawn from that sequence regarding specific order of performance, performance of steps or portions thereof serially rather than concurrently or in an overlapping manner, or performance of the steps depicted exclusively without the occurrence of intervening or intermediate steps. The process depicted in the example depicted is implemented by a processing circuitry, such as a processor or processor array, in, for example, a mobile station.

Most generally, verification method 800 provides steps for implementing updates from a flash device, such as a device executing a binary download software 428, and for implementing remote updates from an update server such as update server 404. Steps 802-814 relate specifically to updating from a flash device while steps 826-836 relate specifically to utilizing remote updates.

When the verification method 800 is receiving and/or utilizing a binary data download or flash type update to a UE, namely a phone, the verification method 800 begins at step 802 by booting the phone in a binary data download mode configured to allow communication between the phone and the flash or binary data download software. Next, at step 804, while the phone downloads the flash type update, the update package is verified by the flashing software. If such verification fails, the verification method 800 proceeds to step 806 and the flash based update procedure is aborted. However, if the verification of the update package is successful, the verification method 800 proceeds to step 808. Note that at step 804, the block device being updated does not require data integrity verification as its data will be fully overwritten by the update package. At step 808, a flashing flag is set. Next, at step 810, the phone reboots in to a secure mode. Next, at step 812, the secure mode kernel verifies the flashing flag, the phone skips hash verification marker and sets a secure marker. At step 814, DM-Dirty, a device mapper, is set up. Next at step 816, additional data is written to the system partition and a hash tree is generated by DM-Dirty. At step 818, the root hash is signed in the TrustZone and the secure marker is removed.

With the flash type update applied to the data partition and having signed the new hash associated with the data partition, the verification method 800 proceeds to step 820 and the phone is booted into a normal boot mode. Next at step 822, the initialization process of the normal boot mode verifies the cryptographically signed root hash and sets up a block device integrity verification tool. If the verification method 800 fails to verify the root hash, the verification method 800 proceeds to step 824 and aborts and can implement a failure action. In some cases, the failure action can include rebooting the phone into a panic mode. In other cases, the failure action can be destruction of the data partition. In still other cases, the failure action can be to repeatedly reboot the phone. However, if at step 822 the verification process 800 verifies the signature of the root hash, the verification method 800 progresses to step 826 and the phone works properly with the block device integrity verification tool enabled.

When the verification method 800 is receiving and/or utilizing a remote update to a UE or phone, the verification method 800 begins at step 828 and the phone reboots into a secure mode. Next, at step 830, the secure mode kernel attempts to verify the signature of the remote update, the signature of the root hash, and the data on /system partition against the entire hash tree. If any of such three verifications returns a failure, the verification method 800 progresses to step 832 which produces a failure action. If at step 830 all above-mentioned verifications pass, the verification method 800 progresses to step 834 and sets up DM-Dirty for the update. At step 836, the remote update and other changes are written to the /system partition and a hash tree is re-generated by DM-Dirty. At step 838, a root hash is signed in a TrustZone-based Integrity Measurement Architecture (TIMA) using a securely stored cryptographic key and the secure marker is removed. With the remote update applied to the data partition and having signed the new hash associated with the data partition, the verification method 800 proceeds to step 820.

Although various features have been shown in the figures and described above, various changes may be made to the figures. For example, the size, shape, arrangement, and layout of components shown in FIGURES 1 through 4 are for illustration only. Each component could have any suitable size, shape, and dimensions, and multiple components could have any suitable arrangement and layout. Also, various components in FIGURES 1 through 4 could be combined, further subdivided, or omitted and additional components could be added according to particular needs. Further, each component in a device or system could be implemented using any suitable structure(s) for performing the described function(s). In addition, while FIGURES 5 through 8 illustrate various series of steps, various steps in FIGURES 5 through 8 could overlap, occur in parallel, occur multiple times, or occur in a different order.

Although the present disclosure has been described with an exemplary embodiment, various changes and modifications may be suggested to one skilled in the art. It is intended that the present disclosure encompass such changes and modifications as fall within the scope of the appended claims.

## Claims

1. A method for operating an electronic device (116) for verifying data integrity of a block device (418), the method comprising:
providing (602) a secure execution environment (412) configured to monitor changes to data blocks of a block device (418);
determining (604) whether a secure marker is present, wherein the secure marker indicates that the block device (418) is verified;
in response to a determination that the secure marker is not present, generating (616) a hash for changed data blocks of the block device (418) in the secure execution environment (412);
verifying (610) a cryptographic signature regarding the hash for the changed data blocks in the secure execution environment (412).

2. The method as set forth in Claim 1, wherein the hash is generated for a data block that has been updated by a file-based update applied to the block device (418);
wherein the method further comprises:
generating a root hash for a hash tree of the block device (418) after the file-based update is completed in the secure execution environment (412).

3. The method as set forth in Claim 2, further comprising:
generating a cryptographic signature of the root hash on the block device (418) at an end of an update process using a cryptographic key (434) in the secure execution environment (412); and
verifying the cryptographic signature of the root hash on the block device (418) at a beginning of the update process using the cryptographic key (434) in the secure execution environment (418).

4. An electronic device (116) operating in a secure execution environment for monitoring changes to data blocks of a block device of the electronic device (116), comprising:
a hash generator (422) configured to operate (602) in the secure execution environment (412) and to determine (604) whether a secure marker is present, wherein the secure marker indicates that the block device (418) is verified, and, in response to a determination that the secure marker is not present, generate (616) a hash for a changed data block of the block device (418);
a cryptographic signature verifier (424) configured to operate in the secure execution environment (412) and to verify (610) a cryptographic signature regarding the hash for the changed data block of the block device (418).

5. The method as set forth in Claim 1 or the electronic device (116) as set forth in Claim 4, wherein the secure execution environment (412) is an isolated and secure mode entered from a trusted boot process.

6. The method as set forth in Claim 1 or the electronic device (116) as set forth in Claim 4, wherein the hash is generated for a data block that has been updated by a file-based update applied to the block device (418).

7. The method or the electronic device (116) as set forth in Claim 6, wherein the file-based update comprises a flash type update or a remote update.

8. The electronic device (116) as set forth in Claim 4, wherein the hash is generated for a data block that has been updated by a file-based update applied to the block device (418); and
wherein the hash generator (422) is configured to generate a root hash for a hash tree of the block device (418).

9. The electronic device (116) as set forth in Claim 4, further comprising:
a secure storage (436) comprising a cryptographic key (434), wherein the secure storage (436) is configured to communicate the cryptographic key (434) to only the secure execution environment (412).

10. The electronic device (116) as set forth in Claim 9, wherein the secure execution environment (412) is configured to cryptographically sign the root hash using the cryptographic key (434).

11. A method for an electronic device (116) for verifying data integrity of a block device (418) of the electronic device (116), the method comprising:
receiving a file-based update package;
applying the file-based update package to a block device (418) of the secure partition;
determining (604) whether a secure marker is present, wherein the secure marker indicates that the block device (418) is verified;
in response to a determination that the secure marker is not present, generating (616) a root hash associated with at least one updated data block of the block device (418); and
verifying (610) a signature regarding the root hash associated with the at least one updated data block.

12. The method as set forth in Claim 11, wherein the generating the root hash is accomplished in a secure execution environment (412) of the electronic device (116).

13. The method as set forth in Claim 12, further comprising:
cryptographically signing the root hash using a cryptographic key.

14. The method as set forth in Claim 13, wherein the cryptographic key (434) is stored in a secure storage (436) of the electronic device (116) and the secure storage (436) is configured to communicate the cryptographic key (434) to only the secure execution environment (412).

15. The method as set forth in Claim 11, wherein verifying a signature comprises verifying the signature of the root hash in the trusted boot process in a normal execution environment (410);
wherein the method further comprises:
setting up a block data integrity tool after verifying the signature of the root hash in a trusted boot process.

## Patentansprüche

1. Verfahren zum Operieren einer elektronischen Vorrichtung (116) zur Verifizierung der Datenintegrität einer Blockvorrichtung (418), wobei das Verfahren umfasst:
ein Bereitstellen (602) einer sicheren Ausführungsumgebung (412), die konfiguriert ist, um Veränderungen von Datenblöcken einer Blockvorrichtung (418) zu überwachen;
ein Bestimmen (604), ob ein sicherer Marker vorhanden ist, wobei der sichere Marker anzeigt, dass die Blockvorrichtung (418) verifiziert ist;
in Reaktion auf eine Bestimmung, dass der sichere Marker nicht vorhanden ist, ein Generieren (616) eines Hashs für veränderte Datenblöcke der Blockvorrichtung (418) in der sicheren Ausführungsumgebung (412);
ein Verifizieren (610) einer kryptographischen Signatur bezüglich des Hashs für die veränderten Datenblöcke in der sicheren Ausführungsumgebung (412).

2. Verfahren nach Anspruch 1, wobei der Hash für einen Datenblock generiert wird, der durch eine auf die Blockvorrichtung (418) angewendete dateibasierte Aktualisierung aktualisiert wurde,
wobei das Verfahren ferner umfasst:
ein Generieren eines Wurzel-Hashs für einen Hash-Baum der Blockvorrichtung (418) nach Abschluss der dateibasierten Aktualisierung in der sicheren Ausführungsumgebung (412).

3. Verfahren nach Anspruch 2, ferner umfassend:
ein Generieren einer kryptographischen Signatur des Wurzel-Hashs an der Blockvorrichtung (418) an einem Ende eines Aktualisierungsprozesses mithilfe eines kryptographischen Schlüssels (434) in der sicheren Ausführungsumgebung (412); und
ein Verifizieren der kryptographischen Signatur des Wurzel-Hashs an der Blockvorrichtung (418) an einem Anfang des Aktualisierungsprozesses mithilfe des kryptographischen Schlüssels (434) in der sicheren Ausführungsumgebung (418).

4. Eine elektronische Vorrichtung (116), die in einer sicheren Ausführungsumgebung zur Überwachung von Veränderungen an Datenblöcken einer Blockvorrichtung der elektronischen Vorrichtung (116) operiert, umfassend:
einen Hash-Generator (422), der konfiguriert ist, um in der sicheren Ausführungsumgebung (412) zu operieren (602) und zu bestimmen (604), ob ein sicherer Marker vorhanden ist, wobei der sichere Marker anzeigt, dass die Blockvorrichtung (418) verifiziert ist, und, in Reaktion auf eine Bestimmung, dass der sichere Marker nicht vorhanden ist, einen Hash für einen veränderten Datenblock der Blockvorrichtung (418) zu generieren (616);
einen kryptographischen Signaturverifizierer (424), der konfiguriert ist, um in der sicheren Umgebung (412) zu operieren und eine kryptographische Signatur bezüglich des Hashs für den veränderten Datenblock der Blockvorrichtung (418) zu verifizieren (610).

5. Verfahren nach Anspruch 1 oder die elektronische Vorrichtung (116) nach Anspruch 4, wobei die sichere Ausführungsumgebung (412) in einem isolierten und sicheren Modus über einen vertrauenswürdigen Bootingprozess betreten wird.

6. Verfahren nach Anspruch 1 oder die elektronische Vorrichtung (116) nach Anspruch 4, wobei der Hash für einen Datenblock generiert wird, der durch eine auf die Blockvorrichtung (418) angewendete dateibasierte Aktualisierung aktualisiert wurde.

7. Verfahren oder die elektronische Vorrichtung (116) nach Anspruch 6, wobei die dateibasierte Aktualisierung eine Aktualisierung vom Flashtyp oder eine räumlich abgesetzte Aktualisierung umfasst.

8. Elektronische Vorrichtung (116) nach Anspruch 4, wobei der Hash für einen Datenblock generiert wird, der durch eine auf die Blockvorrichtung (418) angewendete dateibasierte Aktualisierung aktualisiert wurde; und
wobei der Hash-Generator (422) konfiguriert ist, um ein Wurzel-Hash für einen Hash-Baum der Blockvorrichtung (418) zu generieren.

9. Elektronische Vorrichtung (116) nach Anspruch 4, ferner umfassend:
einen sicheren Speicher (436), umfassend einen kryptographischen Schlüssel (434), wobei der sichere Speicher (436) konfiguriert ist, um den kryptographischen Schlüssel (434) nur an die sichere Umgebung (412) zu kommunizieren.

10. Elektronische Vorrichtung (116) nach Anspruch 9, wobei die sichere Ausführungsumgebung (412) konfiguriert ist, um den Wurzel-Hash mithilfe des kryptographischen Schlüssels (434) kryptographisch zu unterschreiben.

11. Verfahren für eine elektronische Vorrichtung (116) zur Verifizierung der Datenintegrität einer Blockvorrichtung (418) der elektronischen Vorrichtung (116), wobei das Verfahren umfasst:
ein Empfangen eines dateibasierten Aktualisierungspakets;
ein Anwenden des dateibasierten Aktualisierungspakets auf eine Blockvorrichtung (418) der sicheren Partition;
ein Bestimmen (604), ob ein sicherer Marker vorhanden ist, wobei der sichere Marker anzeigt, dass die Blockvorrichtung (418) verifiziert ist;
in Reaktion auf eine Bestimmung, dass der sichere Marker nicht vorhanden ist, ein Generieren (616) eines Wurzel-Hashs mit mindestens einem aktualisierten Datenblock der Blockvorrichtung (418); und
ein Verifizieren (610) einer Signatur bezüglich des dem mindestens einen aktualisierten Datenblock zugeordneten Wurzel-Hashs.

12. Verfahren nach Anspruch 11, wobei das Generieren des Wurzel-Hashs in einer sicheren Ausführungsumgebung (412) der elektronischen Vorrichtung (116) erfolgt.

13. Verfahren nach Anspruch 12, ferner umfassend:
ein kryptographisches Unterschreiben des Wurzel-Hashs mithilfe eines kryptographischen Schlüssels.

14. Verfahren nach Anspruch 13, wobei der kryptographische Schlüssel (434) in einem sicheren Speicher (436) der elektronischen Vorrichtung (116) gespeichert ist und der sichere Speicher (436) konfiguriert ist, um den kryptographischen Schlüssel (434) nur an die sichere Ausführungsumgebung (412) zu kommunizieren.

15. Verfahren nach Anspruch 11, wobei das Verifizieren einer Unterschrift ein Verifizieren der Unterschrift des Wurzel-Hashs im vertrauenswürdigen Bootingprozess in einer normalen Ausführungsumgebung (410) umfasst;
wobei das Verfahren ferner Folgendes umfasst:
ein Einrichten eines Blockdatenintegritätswerkzeugs nach dem Verifizieren der Unterschrift des Wurzel-Hashs in einem vertrauenswürdigen Bootingprozess.

## Revendications

1. Procédé d'utilisation d'un dispositif électronique (116) pour vérifier l'intégrité de données d'un dispositif de blocs (418), le procédé comprenant :
la fourniture (602) d'un environnement d'exécution sécurisé (412) configuré pour surveiller des changements à des blocs de données d'un dispositif de blocs (418) ;
la détermination (604) si un marqueur sécurisé est présent, dans lequel le marqueur sécurisé indique que le dispositif de blocs (418) est vérifié ;
en réponse à une détermination que le marqueur sécurisé n'est pas présent, la génération (616) d'un hachage pour des blocs de données changés du dispositif de blocs (418) dans l'environnement d'exécution sécurisé (412) ;
la vérification (610) d'une signature cryptographique concernant le hachage pour les blocs de données changés dans l'environnement d'exécution sécurisé (412).

2. Procédé selon la revendication 1, dans lequel le hachage est généré pour un bloc de données qui a été mis à jour par une mise à jour basée sur fichier appliquée au dispositif de blocs (418) ;
dans lequel le procédé comprend en outre :
la génération d'un hachage racine pour un arbre de hachage du dispositif de blocs (418) une fois que la mise à jour basée sur fichier est terminée dans l'environnement d'exécution sécurisé (412).

3. Procédé selon la revendication 2, comprenant en outre :
la génération d'une signature cryptographique du hachage racine sur le dispositif de blocs (418) à une fin d'un processus de mise à jour en utilisant une clé cryptographique (434) dans l'environnement d'exécution sécurisé (412) ; et
la vérification de la signature cryptographique du hachage racine sur le dispositif de blocs (418) à un début du processus de mise à jour en utilisant la clé cryptographique (434) dans l'environnement d'exécution sécurisé (418).

4. Dispositif électronique (116) fonctionnant dans un environnement d'exécution sécurisé pour surveiller des changements à des blocs de données d'un dispositif de blocs du dispositif électronique (116), comprenant :
un générateur de hachage (422) configuré pour fonctionner (602) dans l'environnement d'exécution sécurisé (412) et pour déterminer (604) si un marqueur sécurisé est présent, dans lequel le marqueur sécurisé indique que le dispositif de blocs (418) est vérifié, et, en réponse à une détermination que le marqueur sécurisé n'est pas présent, générer (616) un hachage pour un bloc de données changé du dispositif de blocs (418) ;
un vérificateur de signature cryptographique (424) configuré pour fonctionner dans l'environnement d'exécution sécurisé (412) et pour vérifier (610) une signature cryptographique concernant le hachage pour le bloc de données changé du dispositif de blocs (418).

5. Procédé selon la revendication 1 ou dispositif électronique (116) selon la revendication 4, dans lequel l'environnement d'exécution sécurisé (412) est un mode isolé et sécurisé entré depuis un processus de démarrage fiable.

6. Procédé selon la revendication 1 ou dispositif électronique (116) selon la revendication 4, dans lequel le hachage est généré pour un bloc de données qui a été mis à jour par une mise à jour basée sur fichier appliquée au dispositif de blocs (418).

7. Procédé ou dispositif électronique (116) selon la revendication 6, dans lequel la mise à jour basée sur fichier comprend une mise à jour de type flash ou une mise à jour à distance.

8. Dispositif électronique (116) selon la revendication 4, dans lequel le hachage est généré pour un bloc de données qui a été mis à jour par une mise à jour basée sur fichier appliquée au dispositif de blocs (418) ; et
dans lequel le générateur de hachage (422) est configuré pour générer un hachage racine pour un arbre de hachage du dispositif de blocs (418).

9. Dispositif électronique (116) selon la revendication 4, comprenant en outre :
un stockage sécurisé (436) comprenant une clé cryptographique (434), dans lequel le stockage sécurisé (436) est configuré pour communiquer la clé cryptographique (434) uniquement à l'environnement d'exécution sécurisé (412).

10. Dispositif électronique (116) selon la revendication 9, dans lequel l'environnement d'exécution sécurisé (412) est configuré pour signer de manière cryptographique le hachage racine en utilisant la clé cryptographique (434).

11. Procédé pour un dispositif électronique (116) de vérification de l'intégrité de données d'un dispositif de blocs (418) du dispositif électronique (116), le procédé comprenant :
la réception d'un ensemble de mises à jour basé sur fichier ;
l'application de l'ensemble de mises à jour basé sur fichier à un dispositif de blocs (418) de la partition sécurisée ;
la détermination (604) si un marqueur sécurisé est présent, dans lequel le marqueur sécurisé indique que le dispositif de blocs (418) est vérifié ;
en réponse à une détermination que le marqueur sécurisé n'est pas présent, la génération (616) d'un hachage racine associé à au moins un bloc de données mis à jour du dispositif de blocs (418) ; et
la vérification (610) d'une signature concernant le hachage racine associé à l'au moins un bloc de données mis à jour.

12. Procédé selon la revendication 11, dans lequel la génération du hachage racine est réalisée dans un environnement d'exécution sécurisé (412) du dispositif électronique (116).

13. Procédé selon la revendication 12, comprenant en outre :
la signature cryptographique du hachage racine en utilisant une clé cryptographique.

14. Procédé selon la revendication 13, dans lequel la clé cryptographique (434) est stockée dans un stockage sécurisé (436) du dispositif électronique (116) et le stockage sécurisé (436) est configuré pour communiquer la clé cryptographique (434) uniquement à l'environnement d'exécution sécurisé (412).

15. Procédé selon la revendication 11, dans lequel la vérification d'une signature comprend la vérification de la signature du hachage racine dans le processus de démarrage fiable dans un environnement d'exécution normal (410) ;
dans lequel le procédé comprend en outre :
la configuration d'un outil d'intégrité de données de blocs après la vérification de la signature du hachage racine dans un processus de démarrage fiable.
